(19) **Europäisches Patentamt / European Patent Office / Office européen des brevets**

(11) **EP 3 318 975 A1**

(12) **EUROPEAN PATENT APPLICATION**
published in accordance with Art. 153(4) EPC

(43) Date of publication:
09.05.2018 Bulletin 2018/19

(51) Int Cl.:
*G06F 11/16* (2006.01)      *G06F 3/06* (2006.01)

(21) Application number: 16832235.2

(22) Date of filing: 25.07.2016

(86) International application number:
PCT/CN2016/091605

(87) International publication number:
WO 2017/020747 (09.02.2017 Gazette 2017/06)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 31.07.2015 CN 201510466756

(71) Applicant: Huawei Technologies Co., Ltd.
Longgang District
Shenzhen, Guangdong 518129 (CN)

(72) Inventors:
• ZHANG, Jindong
Shenzhen
Guangdong 518129 (CN)
• LI, Jinghui
Shenzhen
Guangdong 518129 (CN)
• GONG, Xuewen
Shenzhen
Guangdong 518129 (CN)

(74) Representative: Maiwald Patentanwalts GmbH
Engineering
Elisenhof
Elisenstrasse 3
80335 München (DE)

(54) **METHOD AND DEVICE FOR DETECTING SLOW DISK**

(57)      The present invention provides a slow-disk detection method and apparatus and relates to the computer field, so as to improve slow-disk detection accuracy. The method includes: periodically performing sampling in a detection period; each time sampling is performed, obtaining a first delay of data reading or writing that is performed on a hard disk in current sampling, and a first-delay-related indicator value; determining a first range to which the first-delay-related indicator value belongs; and if the first range is full, calculating a ratio of the first delay to an average delay in a range, that is, a first ratio; and each time after one detection period ends and before a next detection period starts, if a quantity of all delay-related indicator values that are obtained in all sampling periods in the current detection period and that fall within all full ranges is greater than or equal to a second threshold, calculating an average value of multiple first ratios that are calculated in multiple sampling periods in which multiple delay-related indicator values that fall within all the full ranges are obtained, that is, an average value of first ratios; and if the average value of the first ratios is greater than or equal to a third threshold, determining that the hard disk is a slow disk.

FIG. 2

# Description

This application claims priority to Chinese Patent Application No. 201510466756.X, filed with the Chinese Patent Office on July 31, 2015 and entitled "SLOW-DISK DETECTION METHOD AND APPARATUS", which is incorporated herein by reference in its entirety.

## TECHNICAL FIELD

The present invention relates to the computer field, and in particular, to a slow-disk detection method and apparatus.

## BACKGROUND

In a process of using a hard disk in a storage system, magnetic degradation, bad sector, vibration, or other environmental and mechanical problems of the hard disk may increase a delay of a read or write operation, that is, an input/output (English: input/output, I/O for short) operation, performed on the hard disk. The hard disk on which the delay of the I/O operation is increased is referred to as a slow disk.

Generally, to reduce impact of a slow disk on read or write performance of a storage system, delays of I/O operations performed on hard disks in the storage system can be monitored in real time when the storage system is running, so as to detect whether these hard disks are slow disks. Specifically, a hard disk is used as an example. An average delay of an I/O operation that is performed on the hard disk in each first period is counted, and the average delay is compared with a preset time threshold. If the average delay is greater than or equal to the time threshold, a threshold event is recorded. A quantity of threshold events that occur on the hard disk in each second period (the second period is greater than the first period) is counted, and the quantity is compared with a preset quantity threshold. If the quantity is greater than or equal to the preset quantity threshold, the hard disk may be determined as a slow disk.

However, to avoid a detection error that occurs when an average delay increases because relatively large data is read from or written into the hard disk, a relatively high time threshold is usually set. Consequently, slow-disk detection accuracy may be reduced.

## SUMMARY

Embodiments of the present invention provide a slow-disk detection method and apparatus, so as to improve slow-disk detection accuracy.

According to a first aspect, an embodiment of the present invention provides a slow-disk detection method, where the method includes:

periodically performing sampling in a detection period, and performing the following method in each sampling period:

obtaining a first delay of data reading or writing that is performed on a hard disk in the current sampling period, and a first-delay-related indicator value, where the first-delay-related indicator value is a specific value of a delay-related indicator value, and the delay-related indicator value is a delay-varying value;

determining a first range to which the first-delay-related indicator value belongs, where the first range is one of multiple ranges into which a maximum delay-related indicator value is pre-divided; and

if the first range is a full range, calculating a ratio of the first delay to an average delay in a range, to obtain a first ratio, where the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple first sampling periods, each second delay is obtained in a sampling period corresponding to the second delay, and each sampling period is corresponding to one delay-related indicator value; and

performing the following method each time after one detection period ends and before a next detection period starts:

if a quantity of all delay-related indicator values that are obtained in all sampling periods in the current detection period and that fall within all full ranges is greater than or equal to a second threshold, calculating an average value of multiple first ratios that are calculated in multiple second sampling periods, to obtain an average value of first ratios, where the multiple second sampling periods are sampling periods in which multiple delay-related indicator values that fall within all the full ranges are obtained; and

if the average value of the first ratios is greater than or equal to a third threshold, determining that the hard disk is a slow disk.

With reference to the first aspect, in a first possible implementation manner of the first aspect, in each sampling period, after the determining a first range to which the first-delay-related indicator value belongs, the method further includes:

recording, after the current sampling is performed, that the quantity of all delay-related indicator values that are obtained in all sampling periods and that fall within the first range is a first number, where each sampling period is corresponding to one delay-related indicator value;

determining whether the first number reaches the first threshold; and

if the first number reaches the first threshold, determining that the first range is a full range; or if the first number does not reach the first threshold, determining that the first range is not a full range, and proceeding to a next sampling period for sampling.

With reference to the first aspect or the first possible implementation manner of the first aspect, in a second possible implementation manner of the first aspect, the delay-related indicator value is utilization of the hard disk in data reading or writing; or the delay-related indicator value is a read or write speed of the hard disk in data reading or writing.

With reference to any one of the first aspect, or the first or the second possible implementation manner of the first aspect, in a third possible implementation manner of the first aspect, the first threshold is N, the first range is corresponding to N second delays, N is an integer greater than or equal to 1, and before the calculating a ratio of the first delay to an average delay in a range, the method further includes:

calculating the average value of the multiple second delays of the N second delays, to obtain the average delay in a range.

With reference to the third possible implementation manner of the first aspect, in a fourth possible implementation manner of the first aspect,

the N second delays are sequentially arranged in a sampling order, the multiple second delays are the first M second delays of the N second delays, M is an integer, $N/3 \leq M \leq 2N/3$, and both $N/3$ and $2N/3$ are rounded to integers.

With reference to the fourth possible implementation manner of the first aspect, in a fifth possible implementation manner of the first aspect, $M=N/2$; and

the multiple second delays are the first $N/2$ second delays of the N second delays, and $N/2$ is rounded to an integer.

With reference to any one of the first aspect, or the first to the fifth possible implementation manners of the first aspect, in a sixth possible implementation manner of the first aspect,

the average value of the multiple second delays is an arithmetic average value of the multiple second delays or a geometric average value of the multiple second delays; and

the average value of the multiple first ratios is an arithmetic average value of the multiple first ratios or a geometric average value of the multiple first ratios.

With reference to any one of the first aspect, or the first to the sixth possible implementation manners of the first aspect, in a seventh possible implementation manner of the first aspect, the method is applied to a scenario in which there are multiple hard disks and is performed on a first hard disk, and the first hard disk is one of the multiple hard disks; the method further includes:

obtaining multiple average values that are of first ratios and that are in a one-to-one correspondence with other hard disks of the multiple hard disks except the first hard disk, where a method for obtaining an average value of first ratios that is corresponding to each of the other hard disks is the same as a method for obtaining an average value of first ratios that is corresponding to the first hard disk; and

when an average value of first ratios that is corresponding to each of the multiple hard disks is less than the third threshold, the method further includes:

calculating an average value of multiple average values that are of first ratios and that are in a one-to-one correspondence with the multiple hard disks, to obtain a first average value;

calculating a ratio of the average value of the first ratios that is corresponding to each of the multiple hard disks, to the first average value, so as to obtain multiple second ratios; and

determining that a hard disk corresponding to a second ratio of the multiple second ratios that is greater than or equal to a fourth threshold is a slow disk.

According to a second aspect, an embodiment of the present invention provides a slow-disk detection apparatus, where the apparatus includes:

a sampling unit, configured to: periodically perform sampling in a detection period, and complete the following process in each sampling period:

obtaining a first delay of data reading or writing that is performed on a hard disk in the current sampling period, and a first-delay-related indicator value, where the first-delay-related indicator value is a specific value of a delay-related indicator value, and the delay-related indicator value is a delay-varying value;

determining a first range to which the first-delay-related indicator value belongs, where the first range is one of multiple ranges into which a maximum delay-related indicator value is pre-divided; and

if the first range is a full range, calculating a ratio of the first delay to an average delay in a range, to obtain a first ratio, where the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple first sampling periods, each second delay is obtained in a sampling period corresponding to the second delay, and each sampling period is corresponding to one delay-related indicator value; and

a detection unit, configured to complete the following process each time after one detection period ends and before a next detection period starts:
if a quantity of all delay-related indicator values that are obtained in all sampling periods in the current detection period and that fall within all full ranges is greater than or equal to a second threshold, calculating an average value of multiple first ratios that are calculated by the sampling unit in multiple second sampling periods, to obtain an average value of first ratios, where the multiple second sampling periods are sampling periods in which multiple delay-related indicator values that fall within all the full ranges are obtained; and if the average value of the first ratios is greater than or equal to a third threshold, determining that the hard disk is a slow disk.

With reference to the second aspect, in a first possible implementation manner of the second aspect, the sampling unit is further configured to: in each sampling period, after determining the first range to which the first-delay-related indicator value belongs, record, after the current sampling is performed, that the quantity of all delay-related indicator values that are obtained in all sampling periods and that fall within the first range is a first number; determine whether the first number reaches the first threshold; and if the first number reaches the first threshold, determine that the first range is a full range; or if the first number does not reach the first threshold, determine that the first range is not a full range, and proceed to a next sampling period for sampling, where each sampling period is corresponding to one delay-related indicator value.

With reference to the second aspect or the first possible implementation manner of the second aspect, in a second possible implementation manner of the second aspect,
the delay-related indicator value is utilization of the hard disk in data reading or writing; or the delay-related indicator value is a read or write speed of the hard disk in data reading or writing.

With reference to any one of the second aspect, or the first or the second possible implementation manner of the second aspect, in a third possible implementation manner of the second aspect, the first threshold is N, the first range is corresponding to N second delays, and N is an integer greater than or equal to 1; and
the sampling unit is further configured to: before calculating the ratio of the first delay to the average delay in a range, calculate the average value of the multiple second delays of the N second delays, to obtain the average delay in a range.

With reference to the third possible implementation manner of the second aspect, in a fourth possible implementation manner of the second aspect,
the N second delays are sequentially arranged in a sampling order, the multiple second delays are the first M second delays of the N second delays, M is an integer, $N/3 \leq M \leq 2N/3$, and both N/3 and 2N/3 are rounded to integers.

With reference to the fourth possible implementation manner of the second aspect, in a fifth possible implementation manner of the second aspect, M=N/2; and
the multiple second delays are the first N/2 second delays of the N second delays, and N/2 is rounded to an integer.

With reference to any one of the second aspect, or the first to the fifth possible implementation manners of the second aspect, in a sixth possible implementation manner of the second aspect,
the average value of the multiple second delays that is calculated by the sampling unit is an arithmetic average value of the multiple second delays or a geometric average value of the multiple second delays; and
the average value of the multiple first ratios that is calculated by the detection unit is an arithmetic average value of the multiple first ratios or a geometric average value of the multiple first ratios.

With reference to any one of the second aspect, or the first to the sixth possible implementation manners of the second aspect, in a seventh possible implementation manner of the second aspect, the apparatus is applied to a scenario in which there are multiple hard disks, the apparatus performs detection on a first hard disk, and the first hard disk is one of the multiple hard disks; and
the detection unit is further configured to: obtain multiple average values that are of first ratios and that are in a one-to-one correspondence with other hard disks of the multiple hard disks except the first hard disk; when an average value of first ratios that is corresponding to each of the multiple hard disks is less than the third threshold, calculate an average value of multiple average values that are of first ratios and that are in a one-to-one correspondence with the multiple hard disks, to obtain a first average value; calculate a ratio of the average value of the first ratios that is corresponding to each of the multiple hard disks, to the first average value, so as to obtain multiple second ratios; and determine that a hard disk corresponding to a second ratio of the multiple second ratios that is greater than or equal to a fourth threshold is a slow disk, where a method for obtaining an average value of first ratios that is corresponding to each of the other hard disks is the same as a method for obtaining an average value of first ratios that is corresponding to the first hard disk.

The embodiments of the present invention provide a slow-disk detection method and apparatus. The method includes: periodically performing sampling in a detection period; in each sampling period, obtaining a first delay of data reading or writing that is performed on a hard disk in the current sampling period, and a first-delay-related indicator value, where the first-delay-related indicator value is a specific value of a delay-related indicator value, and the delay-related indicator value is a delay-varying value; determining a first range to which the first-delay-related indicator value belongs, where the first range is one of multiple ranges into which a maximum delay-related indicator value is pre-divided; and if the first range is a full range, calculating a ratio of the first delay to an average delay in a range, to obtain a first ratio, where the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple first sampling periods, each second delay is obtained in a sampling period corresponding to the second delay, and each sampling period is corresponding to one delay-related indicator value; and each time after one detection period ends and before a next detection period starts, if a quantity of all delay-related indicator values that are obtained in all sampling periods in the current detection period and that fall within all full ranges is greater than or equal to a second threshold, calculating an average value of multiple first ratios that are calculated in multiple second sampling periods, to obtain an average value of first ratios, where the multiple second sampling periods are sampling periods in which multiple delay-related indicator values that fall within all the full ranges are obtained; and if the average value of the first ratios is greater than or equal to a third threshold, determining that the hard disk is a slow disk.

Based on the foregoing technical solutions, according to the slow-disk detection method provided in the embodiments of the present invention, first, a delay-related indicator value varies with a delay. That is, the delay is closely related to the delay-related indicator value. Therefore, a maximum delay-related indicator value is divided into ranges, and a delay corresponding to a delay-related indicator value that belongs to each range is sampled in each range. This can ensure that sampled delays in a range have a unified measurement criterion, so as to improve slow-disk detection accuracy. Next, a first ratio is calculated after a first range is a full range (that is, a quantity of all delay-related indicator values that are obtained in all sampling periods and that fall within the first range reaches a first threshold) (a sampling process performed before the first range is full may be considered as a learning process). This can ensure that the first ratio is calculated after enough delay-related indicator values are obtained in the first range (that is, sampling is performed for enough times in the first range), so as to improve the slow-disk detection accuracy. Then, in the embodiments of the present invention, an average value of first ratios is calculated when a quantity of all delay-related indicator values that are obtained in all sampling periods in each detection period and that fall within all full ranges is greater than or equal to a second threshold. This can ensure that the learning process already ends in most ranges. That is, the average value of the first ratios is calculated after sampling is already performed for enough times in most ranges. Therefore, the slow-disk detection accuracy can also be improved. In addition, in the embodiments of the present invention, the calculated average value of the first ratios is an average ratio value obtained from multiple first ratios, and is not an actual delay value. Therefore, the average value of the first ratios may accurately reflect a performance variation tendency of a hard disk. A third threshold is set, and the average value of the first ratios is compared with the third threshold. In this case, when performance of the hard disk varies, the hard disk can be accurately detected as a slow disk, so as to further improve the slow-disk detection accuracy.

## BRIEF DESCRIPTION OF DRAWINGS

FIG. 1 is a schematic architecture diagram of a cloud storage system according to an embodiment of the present invention;
FIG. 2 is a first flowchart of a slow-disk detection method according to an embodiment of the present invention;
FIG. 3 is a second flowchart of a slow-disk detection method according to an embodiment of the present invention;
FIG. 4 is a third flowchart of a slow-disk detection method according to an embodiment of the present invention;
FIG. 5 is a fourth flowchart of a slow-disk detection method according to an embodiment of the present invention;
FIG. 6 is a schematic structural diagram of a slow-disk detection apparatus according to an embodiment of the present invention; and
FIG. 7 is a schematic hardware diagram of a slow-disk detection apparatus according to an embodiment of the present invention.

## DESCRIPTION OF EMBODIMENTS

A slow-disk detection method and apparatus provided in the embodiments of the present invention may be applied to a hard-disk detection scenario. Specifically, the slow-disk detection method and apparatus provided in the embodiments of the present invention may be applied to a hard-disk detection scenario in a cloud storage system.

The cloud storage system is a new concept extended and developed based on a concept of a cloud computing (English: cloud computing) system. The cloud storage system refers to a system in which a large quantity of various storage devices on a network are gathered together according to a function such as cluster application, a grid technology, or a distributed file system by using application software, to work cooperatively, so as to jointly provide data storage and service access functions externally. When an operation and processing core of the cloud computing system is to store and manage a large amount of data, a large quantity of storage devices, for example, hard disks, need to be configured in the cloud computing system. In this case, the cloud computing system becomes a cloud storage system. Therefore, the cloud storage system is a cloud computing system whose core is to store and manage data.

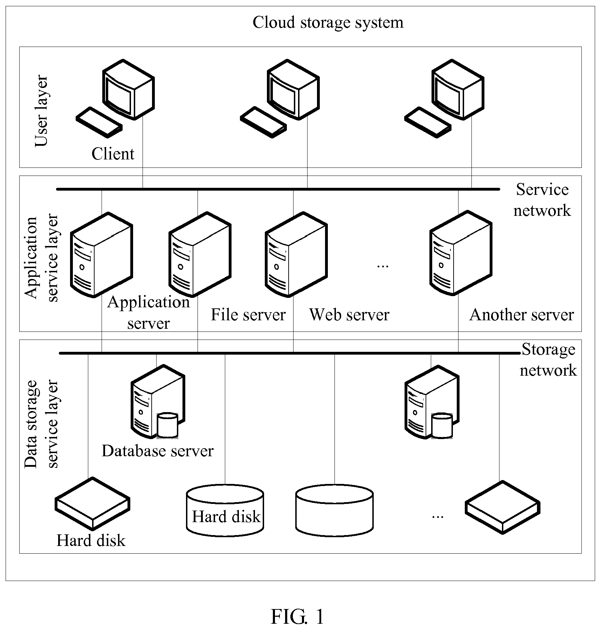

As shown in FIG. 1, FIG. 1 is a schematic architecture diagram of a cloud storage system according to an embodiment of the present invention. The cloud storage system includes a large quantity of storage devices, for example, various hard disks in FIG. 1. Therefore, to improve performance (for example, storage performance and management performance) of the cloud storage system, these storage devices usually need to be maintained. For example, various hard disks are used as storage devices. In a process of using these hard disks, magnetic degradation, bad sector, vibration, or other environmental and mechanical problems of some hard disks may result in relatively large delays of read or write operations performed on these hard disks. Therefore, to improve storage efficiency of the cloud storage system, detection needs to be performed on these hard disks in time, so as to detect a hard disk on which a delay of a read or write operation is relatively large, that is, a slow disk. After a slow disk is detected, the slow disk may be isolated from the cloud storage system (for example, removed by using software or automatically ejected from hardware), so as to improve the storage efficiency of the cloud storage system.

A hard disk provided in the embodiments of the present invention may be a solid-state drive (English: solid state drive, SSD for short), a hard disk drive (English: Hard Disk Drive, HDD for short), or another type of hard disk such as a hybrid hard drive (English: hybrid hard drive, HHD for short), and this is not specifically limited in the present invention. For the SSD, a flash memory chip is used for storage. For the HDD, a magnetic disk is used for storage. The HHD is a hard disk on which a magnetic hard disk and a flash memory are integrated.

With reference to the accompanying drawings, the following describes in detail the slow-disk detection method and apparatus provided in the embodiments of the present invention. The slow-disk detection method provided in the embodiments of the present invention may be performed by the slow-disk detection apparatus. The slow-disk detection apparatus may be a detection node in a cloud storage system. The detection node may be an independent computer node, or a functional unit integrated into a computer node, and this is not specifically limited in the present invention. In the following embodiments, to describe more clearly and completely the slow-disk detection method provided in the embodiments of the present invention, that the method is performed by a detection node is used as an example for description.

**Embodiment 1**

In a cloud storage system, processes of detecting all hard disks by using a slow-disk detection method provided in this embodiment of the present invention are similar. Therefore, in this embodiment, one hard disk is used as an example to describe the slow-disk detection method provided in this embodiment of the present invention.

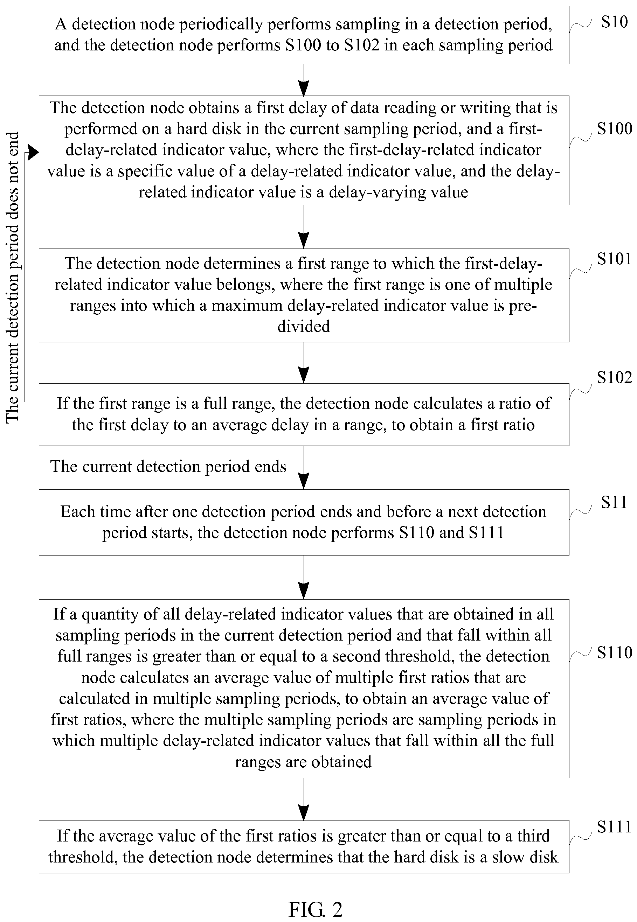

As shown in FIG. 2, this embodiment of the present invention provides a slow-disk detection method. The method may include the following steps.

S10. A detection node periodically performs sampling in a detection period, and the detection node performs S100 to S102 in each sampling period.

S100. The detection node obtains a first delay of data reading or writing that is performed on a hard disk in the current sampling period, and a first-delay-related indicator value, where the first-delay-related indicator value is a specific value of a delay-related indicator value, and the delay-related indicator value is a delay-varying value.

In this embodiment of the present invention, the first-delay-related indicator value is a delay-related indicator obtained in the current sampling period.

The first delay/delay is used to count an average delay of data reading or writing that is performed on the hard disk in a period of time. The average delay is a technology well known by a person skilled in the art. Therefore, details are not described herein.

In this embodiment of the present invention, a prefix "first" in the "first delay" and the "first-delay-related indicator value" merely indicates a particular delay or delay-related indicator value. Prefixes such as "first" and "second" described in other subsequent steps indicate similar meanings.

The delay-related indicator value refers to an indicator value related to a delay (that is, the average delay) of data reading or writing performed on the hard disk. That is, the indicator value is in a regular correspondence with the delay. Specifically, the delay-related indicator value may be an indicator, such as "utilization" of the hard disk in data reading or writing or a "read or write speed" of the hard disk in data reading or writing, that is in a specified correspondence with the delay of data reading or writing performed on the hard disk. For example, a large delay results in high utilization correspondingly (or, results in a low read or write speed correspondingly). That the delay-related indicator value is the "utilization" of the hard disk in data reading or writing or the "read or write speed" of the hard disk in data reading or writing is merely used as an example to describe the slow-disk detection method in this embodiment of the present invention, but not to impose any limitation on this embodiment of the present invention. That is, the delay-related indicator value may be another value that can vary with the delay, and is not limited in this embodiment of the present invention.

In addition, for ease of subsequent description, "utilization" and a "utilization value" or another similar case (for example, an "indicator" and an "indicator value") are not strictly differentiated in this embodiment of the present invention. A person skilled in the art may understand that the "utilization" and the "utilization value" or another similar case indicate same meanings. For example, if "utilization" is XX, a person skilled in the art may understand that actually, this may also indicate that a "utilization value" is XX.

In this embodiment of the present invention, the first-delay-related indicator value may be a value of the "utilization" of the hard disk in data reading or writing (for example, a value such as 20% or 40%); a larger value indicates a larger first delay. Alternatively, the first-delay-related indicator value may be a value of the "read or write speed" of the hard disk in data reading or writing (for example, a value such as 20 M/s or 50 M/s); a larger value indicates a busier system and a larger first delay.

In this embodiment of the present invention, the first delay and the first-delay-related indicator value may be obtained in multiple manners. For example, the first delay and the first-delay-related indicator value may be obtained by using some tools provided in an operating system. For example, based on an iostat tool in a Linux operating system, data such as utilization of the hard disk in a period of time and an average delay of data reading or writing performed on the hard disk may be obtained by using the iostat tool. Alternatively, the first delay and the first-delay-related indicator value may be obtained by using some tools developed in a customized way. How to use a tool provided in a system and how to develop a tool in a customized way to obtain the data shall fall within a technology well known by a person skilled in the art. Details are not described herein.

S101. The detection node determines a first range to which the first-delay-related indicator value belongs, where the first range is one of multiple ranges into which a maximum delay-related indicator value is pre-divided.

In the slow-disk detection method provided in this embodiment of the present invention, a software developer may pre-obtain a maximum delay-related indicator value of data reading or writing performed on the hard disk, divide the maximum delay-related indicator value of data reading or writing performed on the hard disk, to obtain multiple ranges, and write the multiple ranges into a software program that is executed during slow-disk detection.

A different delay-related indicator value may have a different obtaining method. The following uses examples in which the delay-related indicator value is the "utilization" of the hard disk in data reading or writing and the delay-related indicator value is the "read or write speed" of the hard disk in data reading or writing, to describe a method for obtaining the maximum delay-related indicator value of data reading or writing performed on the hard disk.

When the delay-related indicator value is the "utilization" of the hard disk in data reading or writing, generally, the software developer may directly consider that the maximum delay-related indicator value is in theory a maximum value of the "utilization" of the hard disk in data reading or writing. For example, the software developer may directly consider that the maximum delay-related indicator value is 100%. In rare cases, the software developer may obtain the maximum delay-related indicator value by using the iostat tool. In this case, the maximum delay-related indicator value is set by using the iostat tool and according to a medium in the hard disk when data reading or writing is performed on the hard disk. For example, the iostat tool may be used to set in theory, according to a different medium in the hard disk, the maximum delay-related indicator value to an integer multiple (for example, a value such as 200%) of a maximum value of the "utilization" of the hard disk in data reading or writing.

When the delay-related indicator value is the "read or write speed" of the hard disk in data reading or writing, the following several methods may be used to obtain the maximum delay-related indicator value. A first obtaining method is that the software developer obtains the maximum delay-related indicator value according to development experience. For example, after learning a design of an application system and an I/O operation manner of an application, the software developer may estimate a possible value to serve as the maximum delay-related indicator value. A second obtaining method is as follows: When the software developer has no development experience, the software developer may run a read or write test on the hard disk, and obtain the maximum delay-related indicator value according to the read or write test. A third obtaining method is as follows: The software developer may directly use a nominal value of the hard disk as the maximum delay-related indicator value. The nominal value is usually provided by a hard disk vendor. For example, when the hard disk is purchased, a "maximum sustained data transfer rate" (for example, a value such as 210 M/s) may be seen in parameters on the hard disk. The software developer may use the "maximum sustained data transfer rate" as the maximum delay-related indicator value. In the foregoing three obtaining methods, the maximum delay-related indicator value obtained by using the first obtaining method has the highest accuracy, the maximum delay-related indicator value obtained by using the second obtaining method has the second highest accuracy, and the maximum delay-related indicator value obtained by using the third obtaining method has the lowest accuracy.

For example, if the delay-related indicator value is the "utilization" of the hard disk in data reading or writing, maximum utilization of the hard disk in data reading or writing may be divided. For example, assuming that the maximum utilization of the hard disk in data reading or writing is 100%, 0 to 100% may be divided at an interval of 20%, that is, divided into five ranges: [0, 20%), [20%, 40%), [40%, 60%), [60%, 80%), and [80%, 100%]. If the delay-related indicator value is the "read or write speed" of the hard disk in data reading or writing, a maximum read or write speed of the hard disk in data reading or writing (actually, the maximum read or write speed may be a largest reading or writing data amount in a unit time) may be divided. For example, assuming that the maximum read or write speed of the hard disk in data reading or writing is 50 M/s, 0 to 50 M/s may be divided at an interval of 10 M/s, that is, divided into five ranges: [0, 10 M/s), [10 M/s, 20 M/s), [20 M/s, 30 M/s), [30 M/s, 40 M/s), and [40 M/s, 50 M/s].

It should be noted that the foregoing description of dividing the maximum delay-related indicator value of data reading or writing performed on the hard disk is merely an example, and the present invention includes but is not limited to the foregoing described dividing method. In an actual slow-disk detection process, a quantity of ranges into which the maximum delay-related indicator value of data reading or writing performed on the hard disk is divided may be set according to precision of the obtained maximum delay-related indicator value, a magnitude of a first threshold (used to limit a maximum quantity of delay-related indicator values that need to be obtained and that fall within each range), and a requirement on slow-disk detection accuracy, and this is not specifically limited in the present invention. In a first aspect, when the precision of the obtained maximum delay-related indicator value is lower, a larger quantity of ranges may be obtained by means of division, so as to improve the slow-disk detection accuracy. On the contrary, when the precision of the obtained maximum delay-related indicator value is higher, a smaller quantity of ranges may be obtained by means of division. In a second aspect, a higher first threshold may be set to improve the slow-disk detection accuracy. However, if excessive ranges are obtained by means of division, a time for reaching the first threshold in each range is prolonged. Consequently, slow-disk detection sensitivity is reduced. From a perspective of this factor, a smaller quantity of ranges may be obtained by means of division. In a third aspect, when the requirement on the slow-disk detection accuracy is higher, a larger quantity of ranges may be obtained by means of division. In conclusion, during range division, balance may be kept based on the foregoing three aspects. Therefore, a proper quantity of ranges are obtained by means of division, to balance the slow-disk detection accuracy and the slow-disk detection sensitivity.

After the detection node obtains the first-delay-related indicator value of data reading or writing performed on the hard disk, the detection node needs to determine, in the pre-divided multiple ranges, the first range to which the first-delay-related indicator value belongs. For example, the first-delay-related indicator value is a value of the "read or write speed" of the hard disk in data reading or writing, such as a "first read or write speed". If the "first read or write speed" is 33 M/s, the first-delay-related indicator value is 33 M/s. That is, the first range to which the first-delay-related indicator value belongs is the range [30 M/s, 40 M/s).

Further, after the detection node determines the first range to which the currently obtained first-delay-related indicator value belongs, the detection node needs to record, after the current sampling, a quantity of all delay-related indicator values (including all delay-related indicator values obtained before the current sampling, and the currently obtained first-delay-related indicator value) that are obtained in all sampling periods (including the current sampling period and all previous sampling periods) and that fall within the first range. Herein, the quantity is recorded as a "first number". In this embodiment of the present invention, only one delay-related indicator value is obtained in each sampling period. Some delay-related indicator values fall within the first range, and some delay-related indicator values fall beyond the first range. In this case, the first number indicates a quantity of all delay-related indicator values that fall within the first range. For example, assuming that there is a total of 100 sampling periods, a total of 100 delay-related indicator values are obtained in these sampling periods. When 80 delay-related indicator values fall within the first range, the first number is 80.

It may be easily seen that the first number is a constantly accumulated parameter. Therefore, the foregoing process of recording the first number may be considered as a process of "updating the first number". In actual application, there may be multiple methods for recording the first number. For example, a common method may be setting a variable. Each time a delay indicator value obtained in a sampling period falls within the first range, accumulation is performed on the variable (for example, 1 is added). A programming language may be expressed as: first_number=first_number+1, where first_number indicates the "first number".

For example, assuming that before the current sampling, the detection node has recorded 630 delay-related indicator values falling within the first range. In the current sampling, after the detection node determines the first range to which the currently sampled first-delay-related indicator value belongs, the detection node "updates the first number". That is, 1 is added to 630, to obtain an updated first number 631.

It may be understood that in the slow-disk detection method provided in this embodiment of the present invention, hard-disk detection processes performed by the detection node in all ranges are similar. Therefore, in this embodiment and the following embodiments, one range, that is, the first range, is used as an example for description. A detection process in another range is similar to a detection process in the first range, and details are not described in this embodiment of the present invention.

S102. If the first range is a full range, the detection node calculates a ratio of the first delay to an average delay in a range, to obtain a first ratio.

The full range in this embodiment of the present invention refers to a range in which a quantity of all delay-related indicator values that are obtained in all the sampling periods and that fall within the range reaches the first threshold. It can be learned from S101 that, if a delay-related indicator value obtained in a sampling period falls within the first range, a quantity of delay-related indicator values is recorded. Likewise, the detection node may record the quantity of all delay-related indicator values that are obtained in all the sampling periods and that fall within the first range, that is, the first number. Subsequently, the detection node can determine, according to the first number, whether the quantity of all obtained delay-related indicator values that fall within the range has reached the first threshold.

The average delay in a range is an average value of multiple second delays in the first range. The multiple second delays are in a one-to-one correspondence with multiple sampling periods. Each second delay is obtained in a sampling period corresponding to the second delay. All these sampling periods are sampling periods in which a quantity of all obtained delay-related indicator values that fall within the first range reaches the first threshold, that is, sampling periods before the first range is full. Specifically, there are multiple sampling periods in a detection period, and the detection node performs S100 in each sampling period. Therefore, before the first range is full, in each sampling period, the detection node collects a delay-related indicator value (which may be referred to as a second delay-related indicator value herein) corresponding to the period and a delay (which may be referred to as a second delay herein) of data reading or writing performed on the hard disk.

The second delay is used to count an average delay of data reading or writing that is performed on the hard disk in a period of time. The average delay is a technology well known by a person skilled in the art. Therefore, details are not described herein.

Optionally, the first threshold in this embodiment of the present invention may be set according to an actual detection requirement. For example, the first threshold may be set according to a requirement on hard-disk detection accuracy. It may be understood that, a higher requirement on the hard-disk detection accuracy (more data needs to be sampled) indicates a higher first threshold; and a lower requirement on the hard-disk detection accuracy (less data needs to be sampled) indicates a lower first threshold. Specifically, the first threshold may be adaptively adjusted according to an actual use scenario and another detection requirement, and this is not limited in the present invention.

For example, assuming that the first threshold is 1000, that is, sampling needs to be performed for 1000 times in the first range. Before the first range is full, the detection node needs to perform sampling in 1000 sampling periods for 1000 times, that is, obtain 1000 second delay-related indicator values and 1000 second delays. The multiple second delays may be multiple of the 1000 second delays. For example, the multiple second delays may be the 1000 second delays, or some of the 1000 second delays.

The average delay in a range is an average value of the multiple second delays. For example, if the multiple second delays are the obtained 1000 second delays, the average delay in a range is an average value of the 1000 second delays. If the multiple second delays are some of the obtained 1000 second delays, the average delay in a range is an average value of the some second delays. Specifically, the multiple second delays may be selected according to an actual detection requirement, and this is not limited in the present invention.

Optionally, the average value of the multiple second delays may be an arithmetic average value of the multiple second delays, or a geometric average value of the multiple second delays, and this is not specifically limited in the present invention. The arithmetic average value of the multiple second delays may be an unweighted arithmetic average value or a weighted arithmetic average value. The geometric average value of the multiple second delays may be an unweighted geometric average value or a weighted geometric average value.

For example, the unweighted arithmetic average value and the unweighted geometric average value are used as an example. Assuming that an average value of five second delays needs to be calculated, the average value of the five second delays is separately 10 seconds, 11 seconds, 12 seconds, 12 seconds, and 10 seconds. An arithmetic average value of the five second delays is equal to (10+11+12+12+10)/5=11 (seconds), and a geometric average value of the five second delays is equal to $\sqrt[5]{10\times11\times12\times12\times10}=10.96$ (seconds).

A person skilled in the art may understand that the five second delays are merely used as an example to describe a method for calculating an arithmetic average value and a geometric average value, and impose no limitation on this embodiment of the present invention. In an actual application process, a relatively large quantity of second delays are usually selected from the multiple second delays. For example, 500 second delays or 800 second delays may be selected from the 1000 second delays.

In the sampling period, if the quantity of all obtained delay-related indicator values that fall within the first range has reached the first threshold, that is, the first range is a full range, the detection node may calculate a ratio of the first delay to the average delay in a range, to obtain one first ratio, where the first delay is sampled in the current sampling period.

It may be understood that, in this embodiment of the present invention, in the detection period, after the current sampling period, when the first range to which the first-delay-related indicator value of data reading or writing performed on the hard disk belongs is a full range (that is, when the quantity of all delay-related indicator values that are obtained in all the sampling periods and that fall within the first range has reached the first threshold), the detection node needs to calculate the ratio of the first delay to the average delay in a range, to obtain the first ratio, where the first-delay-related indicator value is sampled in the sampling period, and the first delay is currently sampled in data reading or writing performed on the hard disk.

Further, one detection period includes multiple sampling periods. Therefore, after the current sampling period, if the current detection period does not end, the detection node needs to go back to perform S100.

According to the slow-disk detection method provided in this embodiment of the present invention, the detection node periodically performs sampling in each detection period, and performs S100 to S102 in each sampling period, until the detection period ends.

S11. Each time after one detection period ends and before a next detection period starts, the detection node performs S10 and S111.

S110. If a quantity of all delay-related indicator values that are obtained in all sampling periods in the current detection period and that fall within all full ranges is greater than or equal to a second threshold, the detection node calculates an average value of multiple first ratios that are calculated in multiple sampling periods, to obtain an average value of first ratios, where the multiple sampling periods in this step are sampling periods in which multiple delay-related indicator values that fall within all the full ranges are obtained.

It should be noted that a meaning of the "multiple sampling periods" described in this step is different from meanings of several "multiple sampling periods" described in step 102. A person skilled in the art can clearly know an accurate meaning of the "multiple sampling periods" in each step according to a context. Therefore, for ease of description, terms such as "first" and "second" are not strictly used for limitation herein. Likewise, subsequently described "multiple sampling periods" are not limited and differentiated either. A person skilled in the art can clearly determine a meaning of the subsequently described "multiple sampling periods" with reference to a context.

In this embodiment of the present invention, in one detection period, there may be multiple ranges that are full ranges. In this case, some of all delay-related indicator values obtained in all sampling periods in the detection period may fall within all the full ranges, and rest delay-related indicator values may fall within ranges that are not full. After the detection period ends and before a next detection period starts, the detection node needs to determine whether a quantity of all delay-related indicator values that are obtained in all sampling periods in the current detection period and that fall within all the full ranges is greater than or equal to the second threshold. When the quantity is greater than or equal to the second threshold, the detection node calculates an average value of multiple first ratios that are calculated in multiple sampling periods, to obtain an average value of first ratios. The multiple sampling periods are sampling periods in which multiple delay-related indicator values that fall within all the full ranges are obtained. The quantity is greater than or equal to the second threshold, indicating that a learning process already ends in most ranges. That is, most ranges are full ranges, and there are enough obtained delay-related indicator values. In this case, calculating the average value of the first ratios can ensure relatively high slow-disk detection accuracy.

Assuming that there is a total of six ranges, after a previous detection period ends, there are three full ranges: a range A, a range B, and a range C, there are three ranges that are not full: a range D, a range E, and a range F, and 30 delay-related indicator values are obtained in the current detection period.

Five delay-related indicator values fall within the range A.

Eight delay-related indicator values fall within the range B.

Six delay-related indicator values fall within the range C.

Five delay-related indicator values fall within the range D.

Four delay-related indicator values fall within the range E.

Two delay-related indicator values fall within the range F.

Quantity of delay-related indicator values that fall within all the full ranges = Quantity of delay-related indicator values that fall within the range A + Quantity of delay-related indicator values that fall within the range B + Quantity of delay-related indicator values that fall within the range C =5+8+6=19.

Optionally, the second threshold may be preset according to an actual detection requirement, and this is not specifically limited in the present invention.

The second threshold may be used to limit the quantity of all delay-related indicator values that are obtained after each detection period ends and that fall within all the full ranges. A higher second threshold indicates that more data needs to be sampled and sampling results are more convergent. Correspondingly, the slow-disk detection accuracy based on these sampling results is higher. However, because more data needs to be sampled, more time is required, and sensitivity (reflecting detection time) is lower. On the contrary, a lower second threshold indicates that less data needs to be sampled. In this case, accuracy is lower. However, less time is required, and sensitivity is higher.

Preferably, to obtain a better comprehensive benefit between the slow-disk detection accuracy and the slow-disk detection sensitivity, the second threshold may be set to a half of a total quantity of all delay-related indicator values that are obtained in a detection period (that is, a total quantity of times for sampling in the detection period). For example, if a detection period is five minutes, a sampling period is ten seconds, that is, sampling is performed every ten seconds, and one delay-related indicator value is obtained in one sampling, a total of 30 delay-related indicator values are obtained in the detection period. In this case, the second threshold may be set to a half of 30, that is, 15.

For example, in the foregoing example, 19 delay-related indicator values that are obtained in all sampling periods in the current detection period fall within all the full ranges. The quantity is greater than the second threshold 15. In this case, the detection node can calculate an average value of first ratios.

In this embodiment of the present invention, the detection node performs sampling once in each sampling period, that is, obtains one delay-related indicator value. In the sampling period, if a first range to which a first-delay-related indicator value sampled in the current sampling period belongs is a full range, the detection node needs to calculate a ratio of the currently sampled first delay to an average delay in a range, that is, a first ratio. It may be understood that, for a range that is not full, the detection node does not calculate a first ratio. For a full range, if one delay-related indicator value that falls within the full range is obtained (that is, sampling is performed once), one first ratio is calculated in a sampling period in which the delay-related indicator value is obtained.

In the foregoing example, in the current detection period, if five delay-related indicator values that are obtained in all the sampling periods in the current detection period fall within the range A, five first ratios are calculated in five sampling periods in which the five delay-related indicator values falling within the range A are obtained.

Correspondingly, if eight delay-related indicator values that are obtained in all the sampling periods in the current detection period fall within the range B, eight first ratios are calculated in eight sampling periods in which the eight delay-related indicator values falling within the range B are obtained.

If six delay-related indicator values that are obtained in all the sampling periods in the current detection period fall within the range C, six first ratios are calculated in six sampling periods in which the six delay-related indicator values falling within the range C are obtained.

The multiple first ratios calculated in the multiple sampling periods are respectively the foregoing calculated five first ratios, eight first ratios, and six first ratios, that is, a total of 19 first ratios. The detection node calculates an average value of the 19 first ratios, to obtain an average value of first ratios.

Optionally, the average value of the multiple first ratios may be an arithmetic average value of the multiple first ratios, or a geometric average value of the multiple first ratios, and this is not specifically limited in the present invention. The arithmetic average value of the multiple first ratios may be an unweighted arithmetic average value or a weighted arithmetic average value. The geometric average value of the multiple first ratios may be an unweighted geometric average value or a weighted geometric average value.

For details of a method for calculating the arithmetic average value of the multiple first ratios, refer to the foregoing method for calculating the arithmetic average value of the multiple second delays. For details of a method for calculating the geometric average value of the multiple first ratios, refer to the foregoing method for calculating the geometric average value of the multiple second delays. Details are not repeated herein.

Sill. If the average value of the first ratios is greater than or equal to a third threshold, the detection node determines that the hard disk is a slow disk.

When the average value of the first ratios that is calculated by the detection node is greater than or equal to the third threshold, the detection node can determine that the detected hard disk is a slow disk.

The third threshold may be set according to an actual detection requirement, and this is not specifically limited in the present invention. For example, if the requirement on slow-disk detection accuracy is higher, a higher third threshold may be set. In this case, the detection node may detect a slow disk in more detection periods. Therefore, the slow-disk detection accuracy is higher. However, because detection is performed in more detection periods, the slow-disk detection sensitivity is lower. If a requirement on slow-disk detection sensitivity is higher, a lower third threshold may be set. In this case, the detection node may detect a slow disk in fewer detection periods. Therefore, the slow-disk detection sensitivity is higher. However, because detection is performed in fewer detection periods, the slow-disk detection accuracy is lower.

Further, after the detection node determines that the detected hard disk is a slow disk, the detection node may notify a related processing module of a detection result in a manner of log printing, alarm, or interface display, so that the processing module can isolate the hard disk. For example, the processing module may remove the hard disk from the cloud storage system by using software or automatically eject the hard disk from hardware.

According to the slow-disk detection method provided in this embodiment of the present invention, a detection node periodically performs sampling in a detection period, and in each sampling period, obtains a first delay in data reading or writing that is performed on a hard disk in the current sampling period, and a first-delay-related indicator value, determines a first range to which the first-delay-related indicator value belongs, and if the first range is a full range, calculates a ratio of the first delay to an average delay in a range, to obtain a first ratio; and each time after one detection period ends and before a next detection period starts, if a quantity of all delay-related indicator values that are obtained in all sampling periods in the current detection period and that fall within all full ranges is greater than or equal to a second threshold, the detection node calculates an average value of multiple first ratios that are calculated in multiple sampling periods, to obtain an average value of first ratios, where the multiple sampling periods are sampling periods in which multiple delay-related indicator values that fall within all the full ranges are obtained, and if the average value of the first ratios is greater than or equal to a third threshold, the detection node determines that the hard disk is a slow disk.

Based on the foregoing technical solutions, according to the slow-disk detection method provided in this embodiment of the present invention, first, a delay-related indicator value varies with a delay. That is, the delay is closely related to the delay-related indicator value. Therefore, a maximum delay-related indicator value is divided into ranges, and a delay corresponding to a delay-related indicator value that belongs to each range is sampled in each range. This can ensure that sampled delays in a range have a unified measurement criterion, so as to improve slow-disk detection accuracy. Next, a first ratio is calculated after a first range is a full range (that is, a quantity of all delay-related indicator values that are obtained in all sampling periods and that fall within the first range reaches a first threshold) (a sampling process performed before the first range is full may be considered as a learning process). This can ensure that the first ratio is calculated after enough delay-related indicator values are obtained in the first range (that is, sampling is performed for enough times in the first range), so as to improve the slow-disk detection accuracy. Then, in this embodiment of the present invention, an average value of first ratios is calculated when a quantity of all delay-related indicator values that are obtained in all sampling periods in each detection period and that fall within all full ranges is greater than or equal to a second threshold. This can ensure that the learning process already ends in most ranges. That is, the average value of the first ratios is calculated after sampling is already performed for enough times in most ranges. Therefore, the slow-disk detection accuracy can also be improved. In addition, in this embodiment of the present invention, the calculated average value of the first ratios is an average ratio value obtained from multiple first ratios, and is not an actual delay value. Therefore, the average value of the first ratios may accurately reflect a performance variation tendency of a hard disk. A third threshold is set, and the average value of the first ratios is compared with the third threshold. In this case, when performance of the hard disk varies, the hard disk can be accurately detected as a slow disk, so as to further improve the slow-disk detection accuracy.

### Embodiment 2

Based on Embodiment 1, this embodiment of the present invention provides a slow-disk detection method.

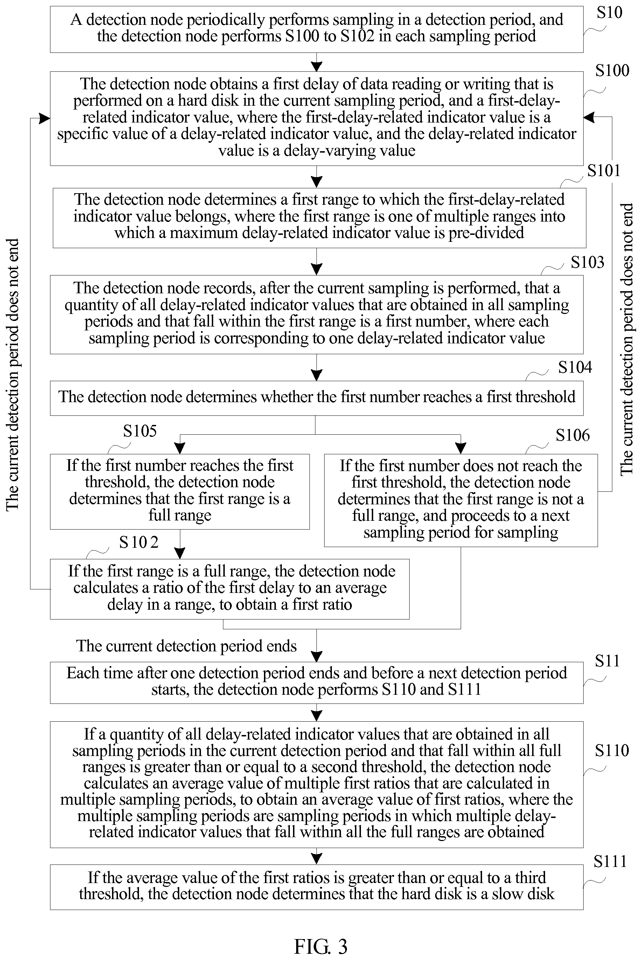

Optionally, with reference to FIG. 2, as shown in FIG. 3, in the slow-disk detection method provided in this embodiment of the present invention, in S10, a detection node further performs S103 to S105, or S103, S104, and S106 in each sampling period. Specifically, after S101, that is, the detection node determines a first range to which a first-delay-related indicator value belongs, the slow-disk detection method provided in this embodiment of the present invention may further include the following steps.

S103. The detection node records, after the current sampling is performed, that the quantity of all delay-related indicator values that are obtained in all sampling periods and that fall within the first range is a first number, where each sampling period is corresponding to one delay-related indicator value.

In this embodiment of the present invention, for a specific description and an example of recording, by the detection node after the current sampling is performed, the quantity, that is, the first number, of all delay-related indicator values that are obtained in all the sampling periods and that fall within the first range, refer to related descriptions and examples in S101 in the foregoing embodiment, and details are not repeated herein.

S104. The detection node determines whether the first number reaches a first threshold.

The first threshold is used to limit a maximum quantity of delay-related indicator values that need to be obtained and that fall within each range (that is, a quantity of delay-related indicator values that need to be sampled in a learning process in each range). Therefore, the detection node may record, after each sampling, the quantity of all delay-related indicator values that are obtained in all the sampling periods and that fall within the first range, and compare the first number with the first threshold, to determine whether a learning process in the first range ends, that is, whether enough data is sampled in the first range.

S105. If the first number reaches the first threshold, the detection node determines that the first range is a full range.

S106. If the first number does not reach the first threshold, the detection node determines that the first range is not a full range, and proceeds to a next sampling period for sampling.

If the first number recorded by the detection node has reached the first threshold, the detection node determines that the first range is a full range. On the contrary, if the first number recorded by the detection node does not reach the first threshold, the detection node determines that the first range is not a full range, and the detection node proceeds to a next sampling period for sampling. For example, if the first threshold is 1000, and if the first number recorded by the detection node is 1000, the detection node determines that the first range is a full range; if the first number recorded by the detection node is 800, the detection node determines that the first range is not a full range, and the detection node proceeds to a next sampling period for the 801st sampling.

In this embodiment of the present invention, in each sampling period in a detection period, after S101, the detection node performs S103 to S105, then performs S102 after S103 to S105 are completed, and goes back to S100 after S102 is completed (that is, proceeds to a next sampling period for sampling after S102 is completed), until the detection period ends. Alternatively, after S101, the detection node performs S103, S104, and S106, and goes back to S100 after S103, S104, and S106 are completed (that is, proceeds to a next sampling period for sampling after S106 is completed), until the detection period ends.

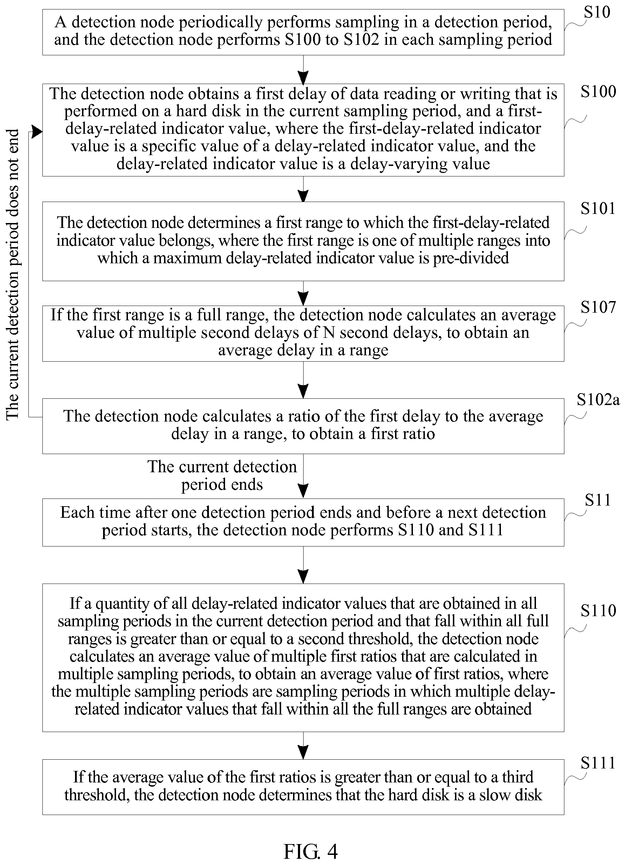

Optionally, with reference to FIG. 2, as shown in FIG. 4, when the first threshold is N and the first range is corresponding to N second delays in the foregoing embodiment, before S102 in which if the first range is a full range, the detection node calculates the ratio of the first delay to the average delay in a range, to obtain the first ratio, the slow-disk detection method provided in this embodiment of the present invention further includes the following steps.

S107. If the first range is a full range, the detection node calculates an average value of multiple second delays of the N second delays, to obtain an average delay in a range.

In this embodiment of the present invention, N may be an integer greater than or equal to 1.

S102 may be specifically:

S102a. The detection node calculates a ratio of the first delay to the average delay in a range, to obtain a first ratio.

In this embodiment of the present invention, when the first range is a full range, a quantity of second delays that are corresponding to the first range is equal to the first threshold. In this embodiment, N second delays are corresponding to the first range. The multiple second delays may be the N second delays, or may be some of the N second delays. Specifically, the multiple second delays may be selected according to an actual detection requirement, and this is not limited in the present invention.

Optionally, the N second delays are sequentially arranged in a sampling order. The multiple second delays are the first M second delays of the N second delays. M is an integer, $N/3 \leq M \leq 2N/3$, and both N/3 and 2N/3 are rounded to integers.

When N is a multiple of 3, both N/3 and 2N/3 are integers. In this case, M ranges between the integers. When N is not a multiple of 3, both N/3 and 2N/3 are decimals. In this case, M ranges from an integer part of N/3 to an integer part of 2N/3.

For example, assuming that N=100, an integer part of 100/3 may be 33, an integer part of 200/3 may be 66, and a value range of M is $33 \leq M \leq 66$.

Certainly, in this embodiment of the present invention, when N is not a multiple of 3, M may be the integer part of N/3 plus 1. Correspondingly, M may also be the integer part of 2N/3 plus 1. For example, M may be the integer part of 100/3, 33, plus 1, that is, 34.

Preferably, M=N/2. The multiple second delays are the first N/2 second delays of the N second delays, and N/2 is rounded to an integer.

When N is an even number, N/2 is an integer. In this case, M is the integer. When N is an odd number, N/2 is a decimal. In this case, M is an integer part of N/2.

For example, when N is 100, N/2 is 50. In this case, M may be 50, that is, the M second delays are the first 50 second delays of the 100 second delays. When N is 121, N/2 is 60.5. In this case, M may be 60, that is, the M second delays are the first 60 second delays of the 121 second delays.

Certainly, in this embodiment of the present invention, when N is an odd number, M may be the integer part of N/2 plus 1. For example, M may be the integer part of 121/2, 60, plus 1, that is, 61.

In this embodiment of the present invention, a quantity of selected second delays determines slow-disk detection accuracy and slow-disk detection sensitivity. Therefore, a larger quantity of selected second delays indicates that more sampled data is used for detection, that sampling results are more convergent, and that the slow-disk detection accuracy is higher. Correspondingly, because the larger quantity of selected second delays may result in a larger value of the average delay in a range, it is not easy to detect a slow disk (a slow disk may be detected in more detection periods), that is, the slow-disk detection sensitivity is lower. A smaller quantity of selected second delays indicates that less sampled data is used for detection, that sampling results are more dispersed, and that the slow-disk detection accuracy is lower. Correspondingly, because the smaller quantity of selected second delays may result in a smaller value of the average delay in a range, it is easy to detect a slow disk (a slow disk may be detected in fewer detection periods), that is, the slow-disk detection sensitivity is higher.

For example, in the following, that the first N/2 second delays of the N second delays are selected as the multiple second delays is used as an example to describe in detail specific selection of the multiple second delays.

Assuming that, in actual application, 11 second delays have been sampled before the first range is full, and the 11 second delays abruptly increase after one sampling. For example, the 11 second delays are respectively 13S, 14S, 15S, 17S, 20S, 21S, 22S, 24S, 25S, 28S, and 30S. An average value of the first five second delays of the 11 second delays, that is, an average delay in a range, is about 16S. An average value of the 11 second delays, that is, an average delay in a range, is about 21S.

In the foregoing enumerated 11 second delays, if the first half of the 11 second delays (11/2=5.5, an integer part of 5.5 is 5), that is, the first five second delays of the 11 second delays, are selected, the average value of the first five second delays, that is, the average delay in a range, is about 16S. When the first ratio (the first delay/the average delay in a range) is calculated, the average delay in a range is used as a denominator. Therefore, a smaller average delay in a range results in a larger first ratio and a larger average value of multiple first ratios, and it is easier for the average value of the first ratios to exceed a specified third threshold. That is, it is easy to detect a slow disk, and the slow-disk detection sensitivity is higher. Correspondingly, because only the first half of the 11 second delays are selected, a detection result may be inaccurate, and the slow-disk detection accuracy is relatively low. If the 11 second delays are selected, the average value of the 11 second delays, that is, the average delay in a range, is about 21S. A larger average delay in a range results in a smaller first ratio and a smaller average value of multiple first ratios, and it is not easy for the average value of the first ratios to exceed a specified third threshold. That is, it is not easy to detect a slow disk, and the slow-disk detection sensitivity is lower. Correspondingly, because the 11 second delays are selected, a detection result may be relatively accurate, and the slow-disk detection accuracy is relatively high.

According to the slow-disk detection method provided in this embodiment of the present invention, when multiple second delays are selected, N second delays corresponding to a first range may be selected, that is, an average value of the N second delays is used as an average delay in a range. Certainly, some of the N second delays may be selected. Specifically, in actual application, sampled data usually "increases abruptly". Therefore, to ensure balance between slow-disk detection accuracy and slow-disk detection sensitivity, the first 2/N second delays of the N second delays may be preferably selected. Specifically, it may be set according to an actual detection requirement, and this is not limited in the present invention.

According to the slow-disk detection method provided in this embodiment of the present invention, compared with selecting the N second delays to calculate the average delay in a range, selecting the first M second delays of the N second delays corresponding to the first range to calculate the average delay in a range can ensure a larger calculated ratio of a first delay to the average delay in a range, that is, a larger first ratio, and further a calculated average value of multiple first ratios is larger. This can properly improve the slow-disk detection sensitivity when the slow-disk detection accuracy is ensured, thereby achieving the balance between the slow-disk detection accuracy and the slow-disk detection sensitivity.

**Embodiment 3**

Based on the foregoing embodiments, this embodiment of the present invention provides a slow-disk detection method. The method is applied to a scenario in which there are multiple hard disks. A detection node performs the method on a first hard disk. The first hard disk is one of the multiple hard disks.

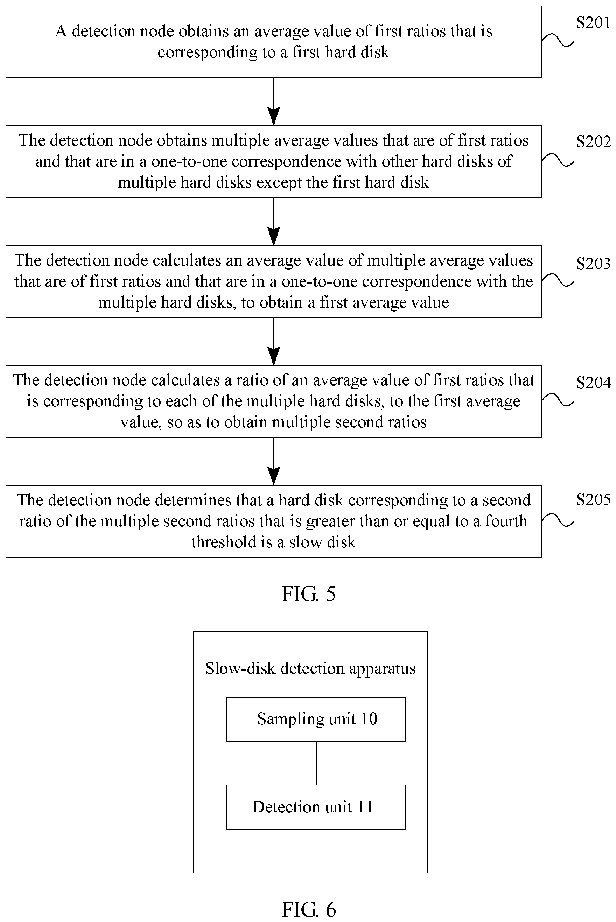

As shown in FIG. 5, this embodiment of the present invention further provides a slow-disk detection method. The method includes the following steps.

S201. The detection node obtains an average value of first ratios that is corresponding to the first hard disk.

Based on descriptions in Embodiment 1 and Embodiment 2, the detection node performs, on the first hard disk, other steps (including S 100 to S 102 in S 10 and S110 in S11) in the steps in the foregoing embodiment shown in FIG. 2 except S111, or other steps (including S100 to S105 in S10 or S100, S101, S103, S104, and S106 in S10 and S110 in S11) in the steps in the foregoing embodiment shown in FIG. 3 except S111, or other steps (including S100, S101, S107, and S102a in S10 and S110 in S11) in the foregoing embodiment shown in FIG. 4 except S111, to obtain the average value of the first ratios that is corresponding to the first hard disk.

S202. The detection node obtains multiple average values that are of first ratios and that are in a one-to-one correspondence with other hard disks of the multiple hard disks except the first hard disk.

A method for obtaining an average value of first ratios that is corresponding to each of the other hard disks is the same as the method for obtaining the average value of the first ratios that is corresponding to the first hard disk. For details, refer to the method for obtaining the average value of the first ratios that is corresponding to the first hard disk. Details are not repeated herein.

Particularly, an average value of first ratios that is corresponding to each of the multiple hard disks is calculated according to multiple first ratios corresponding to the hard disk. For a description of a first ratio, refer to the related description of the first ratio in the foregoing embodiment shown in FIG. 2, and details are not repeated herein.

The detection node performs the foregoing steps on each of the multiple hard disks, to obtain multiple average values that are of first ratios and that are in a one-to-one correspondence with the multiple hard disks. If the average value of the first ratios that is corresponding to each of the multiple hard disks is less than a third threshold, that is, when detection is separately performed on the multiple hard disks, but no slow disk is detected, as shown in FIG. 5, the slow-disk detection method provided in this embodiment of the present invention may further include the following steps.

S203. The detection node calculates an average value of multiple average values that are of first ratios and that are in a one-to-one correspondence with the multiple hard disks, to obtain a first average value.

In the slow-disk detection method provided in this embodiment of the present invention, to ensure slow-disk detection accuracy, multi-disk detection is performed in a same range. For example, in this embodiment, multi-disk detection is performed in a first range.

For example, it is assumed that there are five hard disks: a hard disk A, a hard disk B, a hard disk C, a hard disk D, and a hard disk E. After the detection node separately obtains that an average value of first ratios of the hard disk A is TA, an average value of first ratios of the hard disk B is TB, an average value of first ratios of the hard disk C is TC, an average value of first ratios of the hard disk D is TD, and an average value of first ratios of the hard disk E is TE, the detection node calculates an average value of TA, TB, TC, TD, and TE, that is, the first average value.

The average value of the multiple average values of the first ratios may be an arithmetic average value of the multiple average values of the first ratios, or a geometric average value of the multiple average values of the first ratios, and this is not specifically limited in the present invention. The arithmetic average value of the multiple average values of the first ratios may be an unweighted arithmetic average value or a weighted arithmetic average value. The geometric average value of the multiple average values of the first ratios may be an unweighted geometric average value or a weighted geometric average value.

For details of a method for calculating the arithmetic average value of the multiple average values of the first ratios, refer to the method for calculating the arithmetic average value of the multiple second delays in the foregoing embodiment shown in FIG. 2. For details of a method for calculating the geometric average value of the multiple average values of the first ratios, refer to the method for calculating the geometric average value of the multiple second delays in the foregoing embodiment shown in FIG. 2. Details are not repeated herein.

S204. The detection node calculates a ratio of an average value of first ratios that is corresponding to each of the multiple hard disks, to the first average value, so as to obtain multiple second ratios.

S205. The detection node determines that a hard disk corresponding to a second ratio of the multiple second ratios that is greater than or equal to a fourth threshold is a slow disk.

Optionally, the fourth threshold may be preset according to an actual detection requirement, and this is not specifically limited in the present invention.

Because the multiple hard disks are homogeneous disks, the multiple hard disks have relatively similar performance, and a fluctuation of the multiple hard disks is relatively small. Therefore, the fourth threshold may be used to measure a fluctuation in an average value that is of each hard disk and that is compared with an average value of all hard disks. In this embodiment of the present invention, a lower fourth threshold indicates that the fluctuation in the average value that is of each hard disk and that is compared with the average value of all hard disks needs to be smaller. In this case, during detection, if a hard disk is slightly fluctuated, the second ratio may exceed the fourth threshold, thereby improving slow-disk detection accuracy and slow-disk detection sensitivity.

Preferably, in the slow-disk detection method provided in this embodiment of the present invention, to ensure the slow-disk detection accuracy, during single-disk detection, a relatively high third threshold may be set to avoid an inaccurate detection result caused by an abrupt fluctuation in performance of a hard disk, so as to improve the slow-disk detection accuracy. During multi-disk detection, a relatively low fourth threshold may be set because the fluctuation of the multiple hard disks is usually small, so as to improve the slow-disk detection accuracy.

According to the slow-disk detection method provided in this embodiment of the present invention, when the detection node separately performs detection on the multiple hard disks, but no slow disk is detected (that is, the multiple average values that are of the first ratios and that are in a one-to-one correspondence with the multiple hard disks are less than the third threshold), the detection node may further perform multi-disk detection by using the method shown in FIG. 5. Therefore, a slow disk that is not detected during single-disk detection can be detected, and further, slow-disk detection accuracy can be improved.

Further, after the detection node determines that one of the multiple hard disks is a slow disk, the detection node may notify a related processing module of a detection result in a manner of log printing, alarm, or interface display, so that the processing module can isolate the hard disk. For example, the processing module may remove the hard disk from a cloud storage system by using software or automatically eject the hard disk from hardware.

This embodiment of the present invention provides a slow-disk detection method. The method is applied to a scenario in which there are multiple hard disks. When an average value of first ratios that is corresponding to each of multiple hard disks and that is obtained by a detection node is less than a third threshold in the foregoing embodiment, that is, when single-disk detection is separately performed on the multiple hard disks, but no slow disk is detected, multi-disk detection may further be performed on the multiple hard disks. That is, in this embodiment of the present invention, a ratio of the average value of the first ratios that is corresponding to each hard disk, to a first average value (an average value of multiple average values that are of first ratios and that are in a one-to-one correspondence with the multiple hard disks), that is, a second ratio, is detected according to features that homogeneous disks have similar parameters and performance. Therefore, when an average value of first ratios that is corresponding to a hard disk is slightly fluctuated compared with the first average value, a fluctuation may be detected. Further, a slow disk may be detected when no slow disk is detected during the separately performed single-disk detection, and further, slow-disk detection accuracy can be improved.

**Embodiment 4**

As shown in FIG. 6, this embodiment of the present invention provides a slow-disk detection apparatus. The slow-disk detection apparatus may be a detection node in a cloud storage system. The detection node may be an independent computer node, or a functional unit integrated into a computer node, and this is not specifically limited in the present invention.

Specifically, the slow-disk detection apparatus provided in this embodiment of the present invention may include a sampling unit 10 and a detection unit 11.

The sampling unit 10 is configured to: periodically perform sampling in a detection period, and complete the following process in each sampling period:

obtaining a first delay of data reading or writing that is performed on a hard disk in the current sampling period, and a first-delay-related indicator value, where the first-delay-related indicator value is a specific value of a delay-related indicator value, and the delay-related indicator value is a delay-varying value;

determining a first range to which the first-delay-related indicator value belongs, where the first range is one of multiple ranges into which a maximum delay-related indicator value is pre-divided; and

if the first range is a full range, calculating a ratio of the first delay to an average delay in a range, to obtain a first ratio, where the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple sampling periods, each second delay is obtained in a sampling period corresponding to the second delay, and each sampling period is corresponding to one delay-related indicator value.

The detection unit 11 is configured to complete the following process each time after one detection period ends and before a next detection period starts:
if a quantity of all delay-related indicator values that are obtained in all sampling periods in the current detection period and that fall within all full ranges is greater than or equal to a second threshold, calculating an average value of multiple first ratios that are calculated by the sampling unit in multiple sampling periods, to obtain an average value of first ratios, where the multiple sampling periods are sampling periods in which multiple delay-related indicator values that fall within all the full ranges are obtained; and if the average value of the first ratios is greater than or equal to a third threshold, determining that the hard disk is a slow disk.

Optionally, the sampling unit 10 is further configured to: in each sampling period, after determining the first range to which the first-delay-related indicator value belongs, record, after the current sampling is performed, that the quantity of all delay-related indicator values that are obtained in all sampling periods and that fall within the first range is a first number; determine whether the first number reaches the first threshold; and if the first number reaches the first threshold, determine that the first range is a full range; or if the first number does not reach the first threshold, determine that the first range is not a full range, and proceed to a next sampling period for sampling, where each sampling period is corresponding to one delay-related indicator value.

Optionally, the delay-related indicator value is utilization of the hard disk in data reading or writing; or the delay-related indicator value is a read or write speed of the hard disk in data reading or writing.

Optionally, the first threshold is N. The first range is corresponding to N second delays. N is an integer greater than or equal to 1.

The sampling unit 10 is further configured to: before calculating the ratio of the first delay to the average delay in a range, calculate the average value of the multiple second delays of the N second delays, to obtain the average delay in a range.

Optionally, the N second delays are sequentially arranged in a sampling order. The multiple second delays are the first M second delays of the N second delays. M is an integer, $N/3 \leq M \leq 2N/3$, and both N/3 and 2N/3 are rounded to integers.

Optionally, M=N/2. The multiple second delays are the first N/2 second delays of the N second delays, and N/2 is rounded to an integer.

Optionally, the average value of the multiple second delays that is calculated by the sampling unit 10 is an arithmetic average value of the multiple second delays or a geometric average value of the multiple second delays.

The average value of the multiple first ratios that is calculated by the detection unit 11 is an arithmetic average value of the multiple first ratios or a geometric average value of the multiple first ratios.

Optionally, the apparatus is applied to a scenario in which there are multiple hard disks. The apparatus performs detection on a first hard disk. The first hard disk is one of the multiple hard disks.

The detection unit 11 is further configured to: obtain multiple average values that are of first ratios and that are in a one-to-one correspondence with other hard disks of the multiple hard disks except the first hard disk; when an average value of first ratios that is corresponding to each of the multiple hard disks is less than the third threshold, calculate an average value of multiple average values that are of first ratios and that are in a one-to-one correspondence with the multiple hard disks, to obtain a first average value; calculate a ratio of the average value of the first ratios that is corresponding to each of the multiple hard disks, to the first average value, so as to obtain multiple second ratios; and determine that a hard disk corresponding to a second ratio of the multiple second ratios that is greater than or equal to a fourth threshold is a slow disk, where a method for obtaining an average value of first ratios that is corresponding to each of the other hard disks is the same as a method for obtaining an average value of first ratios that is corresponding to the first hard disk.

According to the slow-disk detection apparatus provided in this embodiment of the present invention, when the apparatus separately performs detection on the multiple hard disks, but no slow disk is detected (that is, the average value of the first ratios that is corresponding to each of the multiple hard disks is less than the third threshold), the apparatus may further perform multi-disk detection. Therefore, a slow disk that is not detected during single-disk detection can be detected, and further, slow-disk detection accuracy can be improved.

According to the slow-disk detection apparatus provided in this embodiment of the present invention, first, a delay-related indicator value obtained by the apparatus varies with a delay. That is, the delay is closely related to the delay-related indicator value. Therefore, a maximum delay-related indicator value is divided into ranges, and a delay corresponding to a delay-related indicator value that belongs to each range is sampled in each range. This can ensure that sampled delays in a range have a unified measurement criterion, so as to improve slow-disk detection accuracy. Next, the apparatus calculates a first ratio after a first range is a full range (that is, a quantity of all delay-related indicator values that are obtained in all sampling periods and that fall within the first range reaches a first threshold) (a sampling process performed before the first range is full may be considered as a learning process). This can ensure that the first ratio is calculated after enough delay-related indicator values are obtained in the first range (that is, sampling is performed for enough times in the first range), so as to improve the slow-disk detection accuracy. Then, the apparatus calculates an average value of first ratios when a quantity of all delay-related indicator values that are obtained in all sampling periods in each detection period and that fall within all full ranges is greater than or equal to a second threshold. This can ensure that the learning process already ends in most ranges. That is, the average value of the first ratios is calculated after sampling is already performed for enough times in most ranges. Therefore, the slow-disk detection accuracy can also be improved. In addition, in this embodiment of the present invention, the average value of the first ratios that is calculated by the slow-disk detection apparatus is an average ratio value obtained from multiple first ratios, and is not an actual delay value. Therefore, the average value of the first ratios may accurately reflect a performance variation tendency of a hard disk. A third threshold is set, and the average value of the first ratios is compared with the third threshold. In this case, when performance of the hard disk varies, the hard disk can be accurately detected as a slow disk, so as to further improve the slow-disk detection accuracy.

**Embodiment 5**

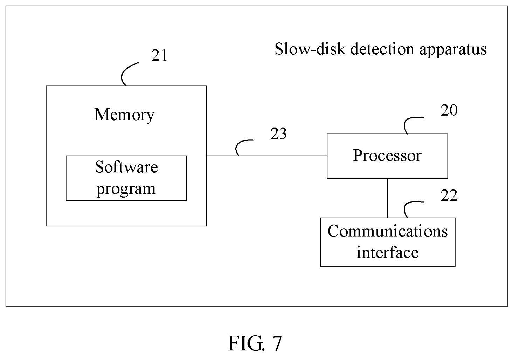

As shown in FIG. 7, this embodiment of the present invention provides a slow-disk detection apparatus. The slow-disk detection apparatus may be a detection node in a cloud storage system. The detection node may be an independent computer node, or a functional unit integrated into a computer node, and this is not specifically limited in the present invention.

Specifically, the slow-disk detection apparatus provided in this embodiment of the present invention may include a processor 20, a memory 21, a communications interface 22, and a system bus 23. The processor 20, the memory 21, and the communications interface 22 are connected and communicate with each other by using the system bus 23.

The processor 20 may be a central processing unit (English: central processing unit, CPU for short), an application-specific integrated circuit (English: application specific integrated circuit, ASIC for short), or one or more integrated circuits configured to implement this embodiment of the present invention.

The communications interface 22 may be a communications interface used by the slow-disk detection apparatus to communicate with another device.

The memory 21 may include a volatile memory (English: volatile memory), for example, a random-access memory (English: random-access memory, RAM for short). Alternatively, the memory 21 may include a non-volatile memory (English: non-volatile memory), for example, a read-only memory (English: read-only memory, ROM for short), a flash memory (English: flash memory), an SSD, an HDD, or an HHD. Alternatively, the memory 21 may include a combination of the foregoing types of memories.

When the slow-disk detection apparatus provided in this embodiment of the present invention is running, the processor 20 may perform, by reading a program stored in the memory, any one of the method processes described in FIG. 2 to FIG. 5. This specifically includes the following.

The processor 20 is configured to: periodically perform sampling in a detection period, and complete the following process in each sampling period:

obtaining a first delay of data reading or writing that is performed on a hard disk in the current sampling period, and a first-delay-related indicator value, where the first-delay-related indicator value is a specific value of a delay-related indicator value, and the delay-related indicator value is a delay-varying value;

determining a first range to which the first-delay-related indicator value belongs, where the first range is one of multiple ranges into which a maximum delay-related indicator value is pre-divided; and

if the first range is a full range, calculating a ratio of the first delay to an average delay in a range, to obtain a first ratio, where the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple sampling periods, each second delay is obtained in a sampling period corresponding to the second delay, and each sampling period is corresponding to one delay-related indicator value.

The processor 20 is further configured to complete the following process each time after one detection period ends and before a next detection period starts: if a quantity of all delay-related indicator values that are obtained in all sampling periods in the current detection period and that fall within all full ranges is greater than or equal to a second threshold, calculating an average value of multiple first ratios that are calculated by the sampling unit in multiple sampling periods, to obtain an average value of first ratios, where the multiple sampling periods are sampling periods in which multiple delay-related indicator values that fall within all the full ranges are obtained; and if the average value of the first ratios is greater than or equal to a third threshold, determining that the hard disk is a slow disk.

The memory 21 is configured to store a software program used by the processor 20 to perform the foregoing slow-disk detection processes. The processor 20 completes the foregoing slow-disk detection processes by executing the software program.

Optionally, the processor 20 is further configured to: in each sampling period, after determining the first range to which the first-delay-related indicator value belongs, record, after the current sampling is performed, that the quantity of all delay-related indicator values that are obtained in all sampling periods and that fall within the first range is a first number; determine whether the first number reaches the first threshold; and if the first number reaches the first threshold, determine that the first range is a full range; or if the first number does not reach the first threshold, determine that the first range is not a full range, and proceed to a next sampling period for sampling, where each sampling period is corresponding to one delay-related indicator value.

Optionally, the delay-related indicator value is utilization of the hard disk in data reading or writing; or the delay-related indicator value is a read or write speed of the hard disk in data reading or writing.

Optionally, the first threshold is N. The first range is corresponding to N second delays. N is an integer greater than or equal to 1.

The processor 20 is further configured to: before calculating the ratio of the first delay to the average delay in a range, calculate the average value of the multiple second delays of the N second delays, to obtain the average delay in a range.

Optionally, the N second delays are sequentially arranged in a sampling order. The multiple second delays are the first M second delays of the N second delays. M is an integer, $N/3 \leq M \leq 2N/3$, and both $N/3$ and $2N/3$ are rounded to integers.

Optionally, $M=N/2$. The multiple second delays are the first $N/2$ second delays of the N second delays, and $N/2$ is rounded to an integer.

Optionally, the average value of the multiple second delays that is calculated by the processor 20 is an arithmetic average value of the multiple second delays or a geometric average value of the multiple second delays.

The average value of the multiple first ratios that is calculated by the processor 20 is an arithmetic average value of the multiple first ratios or a geometric average value of the multiple first ratios.

Optionally, the apparatus is applied to a scenario in which there are multiple hard disks. The apparatus performs detection on a first hard disk. The first hard disk is one of the multiple hard disks.

The processor 20 is further configured to: obtain multiple average values that are of first ratios and that are in a one-to-one correspondence with other hard disks of the multiple hard disks except the first hard disk; when an average value of first ratios that is corresponding to each of the multiple hard disks is less than the third threshold, calculate an average value of multiple average values that are of first ratios and that are in a one-to-one correspondence with the multiple hard disks, to obtain a first average value; calculate a ratio of the average value of the first ratios that is corresponding to each of the multiple hard disks, to the first average value, so as to obtain multiple second ratios; and determine that a hard disk corresponding to a second ratio of the multiple second ratios that is greater than or equal to a fourth threshold is a slow disk, where a method for obtaining an average value of first ratios that is corresponding to each of the other hard disks is the same as a method for obtaining an average value of first ratios that is corresponding to the first hard disk.

According to the slow-disk detection apparatus provided in this embodiment of the present invention, when the apparatus separately performs detection on the multiple hard disks, but no slow disk is detected (that is, the average value of the first ratios that is corresponding to each of the multiple hard disks is less than the third threshold), the apparatus may further perform multi-disk detection. Therefore, a slow disk that is not detected during single-disk detection can be detected, and further, slow-disk detection accuracy can be improved.

According to the slow-disk detection apparatus provided in this embodiment of the present invention, first, a delay-related indicator value obtained by the apparatus varies with a delay. That is, the delay is closely related to the delay-related indicator value. Therefore, a maximum delay-related indicator value is divided into ranges, and a delay corresponding to a delay-related indicator value that belongs to each range is sampled in each range. This can ensure that sampled delays in a range have a unified measurement criterion, so as to improve slow-disk detection accuracy. Next, the apparatus calculates a first ratio after a first range is a full range (that is, a quantity of all delay-related indicator values that are obtained in all sampling periods and that fall within the first range reaches a first threshold) (a sampling process performed before the first range is full may be considered as a learning process). This can ensure that the first ratio is calculated after enough delay-related indicator values are obtained in the first range (that is, sampling is performed for enough times in the first range), so as to improve the slow-disk detection accuracy. Then, the apparatus calculates an average value of first ratios when a quantity of all delay-related indicator values that are obtained in all sampling periods in each detection period and that fall within all full ranges is greater than or equal to a second threshold. This can ensure that the learning process already ends in most ranges. That is, the average value of the first ratios is calculated after sampling is already performed for enough times in most ranges. Therefore, the slow-disk detection accuracy can also be improved. In addition, in this embodiment of the present invention, the average value of the first ratios that is calculated by the slow-disk detection apparatus is an average ratio value obtained from multiple first ratios, and is not an actual delay value. Therefore, the average value of the first ratios may accurately reflect a performance variation tendency of a hard disk. A third threshold is set, and the average value of the first ratios is compared with the third threshold. In this case, when performance of the hard disk varies, the hard disk can be accurately detected as a slow disk, so as to further improve the slow-disk detection accuracy.

The foregoing descriptions about implementation manners allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a specific working process of the foregoing system, apparatus, and unit, refer to a corresponding process in the foregoing method embodiments, and details are not repeated herein.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A slow-disk detection method, wherein the method comprises:

    periodically performing sampling in a detection period, and performing the following method in each sampling period:

obtaining a first delay of data reading or writing that is performed on a hard disk in the current sampling period, and a first-delay-related indicator value, wherein the first-delay-related indicator value is a specific value of a delay-related indicator value, and the delay-related indicator value is a delay-varying value;

determining a first range to which the first-delay-related indicator value belongs, wherein the first range is one of multiple ranges into which a maximum delay-related indicator value is pre-divided; and

if the first range is a full range, calculating a ratio of the first delay to an average delay in a range, to obtain a first ratio, wherein the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple first sampling periods, each second delay is obtained in a sampling period corresponding to the second delay, and each sampling period is corresponding to one delay-related indicator value; and

performing the following method each time after one detection period ends and before a next detection period starts:

if a quantity of all delay-related indicator values that are obtained in all sampling periods in the current detection period and that fall within all full ranges is greater than or equal to a second threshold, calculating an average value of multiple first ratios that are calculated in multiple second sampling periods, to obtain an average value of first ratios, wherein the multiple second sampling periods are sampling periods in which multiple delay-related indicator values that fall within all the full ranges are obtained; and

if the average value of the first ratios is greater than or equal to a third threshold, determining that the hard disk is a slow disk.

2. The method according to claim 1, wherein in each sampling period, after the determining a first range to which the first-delay-related indicator value belongs, the method further comprises:

recording, after the current sampling is performed, that the quantity of all delay-related indicator values that are obtained in all sampling periods and that fall within the first range is a first number, wherein each sampling period is corresponding to one delay-related indicator value;

determining whether the first number reaches the first threshold; and

if the first number reaches the first threshold, determining that the first range is a full range; or if the first number does not reach the first threshold, determining that the first range is not a full range, and proceeding to a next sampling period for sampling.

3. The method according to claim 1 or 2, wherein the delay-related indicator value is utilization of the hard disk in data reading or writing; or the delay-related indicator value is a read or write speed of the hard disk in data reading or writing.

4. The method according to any one of claims 1 to 3, wherein the first threshold is N, the first range is corresponding to N second delays, N is an integer greater than or equal to 1, and before the calculating a ratio of the first delay to an average delay in a range, the method further comprises:
calculating the average value of the multiple second delays of the N second delays, to obtain the average delay in a range.

5. The method according to claim 4, wherein the N second delays are sequentially arranged in a sampling order, the multiple second delays are the first M second delays of the N second delays, M is an integer, $N/3 \leq M \leq 2N/3$, and both N/3 and 2N/3 are rounded to integers.

6. The method according to claim 5, wherein M=N/2; and
the multiple second delays are the first N/2 second delays of the N second delays, and N/2 is rounded to an integer.

7. The method according to any one of claims 1 to 6, wherein
the average value of the multiple second delays is an arithmetic average value of the multiple second delays or a geometric average value of the multiple second delays; and
the average value of the multiple first ratios is an arithmetic average value of the multiple first ratios or a geometric average value of the multiple first ratios.

8. The method according to any one of claims 1 to 7, wherein the method is applied to a scenario in which there are multiple hard disks and is performed on a first hard disk, and the first hard disk is one of the multiple hard disks; the method further comprises:

obtaining multiple average values that are of first ratios and that are in a one-to-one correspondence with other hard disks of the multiple hard disks except the first hard disk, wherein a method for obtaining an average value of first ratios that is corresponding to each of the other hard disks is the same as a method for obtaining an average value of first ratios that is corresponding to the first hard disk; and

when an average value of first ratios that is corresponding to each of the multiple hard disks is less than the third threshold, the method further comprises:

calculating an average value of multiple average values that are of first ratios and that are in a one-to-one correspondence with the multiple hard disks, to obtain a first average value;

calculating a ratio of the average value of the first ratios that is corresponding to each of the multiple hard disks, to the first average value, so as to obtain multiple second ratios; and

determining that a hard disk corresponding to a second ratio of the multiple second ratios that is greater than or equal to a fourth threshold is a slow disk.

**9.** A slow-disk detection apparatus, wherein the apparatus comprises:

a sampling unit, configured to: periodically perform sampling in a detection period, and complete the following process in each sampling period:

obtaining a first delay of data reading or writing that is performed on a hard disk in the current sampling period, and a first-delay-related indicator value, wherein the first-delay-related indicator value is a specific value of a delay-related indicator value, and the delay-related indicator value is a delay-varying value;

determining a first range to which the first-delay-related indicator value belongs, wherein the first range is one of multiple ranges into which a maximum delay-related indicator value is pre-divided; and

if the first range is a full range, calculating a ratio of the first delay to an average delay in a range, to obtain a first ratio, wherein the full range is a range in which a quantity of all delay-related indicator values that are obtained in all sampling periods and that fall within the range reaches a first threshold, the average delay in a range is an average value of multiple second delays in the first range, the multiple second delays are in a one-to-one correspondence with multiple first sampling periods, each second delay is obtained in a sampling period corresponding to the second delay, and each sampling period is corresponding to one delay-related indicator value; and

a detection unit, configured to complete the following process each time after one detection period ends and before a next detection period starts:

if a quantity of all delay-related indicator values that are obtained in all sampling periods in the current detection period and that fall within all full ranges is greater than or equal to a second threshold, calculating an average value of multiple first ratios that are calculated by the sampling unit in multiple second sampling periods, to obtain an average value of first ratios, wherein the multiple second sampling periods are sampling periods in which multiple delay-related indicator values that fall within all the full ranges are obtained; and if the average value of the first ratios is greater than or equal to a third threshold, determining that the hard disk is a slow disk.

**10.** The apparatus according to claim 9, wherein the sampling unit is further configured to: in each sampling period, after determining the first range to which the first-delay-related indicator value belongs, record, after the current sampling is performed, that the quantity of all delay-related indicator values that are obtained in all sampling periods and that fall within the first range is a first number; determine whether the first number reaches the first threshold; and if the first number reaches the first threshold, determine that the first range is a full range; or if the first number does not reach the first threshold, determine that the first range is not a full range, and proceed to a next sampling period for sampling, wherein each sampling period is corresponding to one delay-related indicator value.

**11.** The apparatus according to claim 9 or 10, wherein the delay-related indicator value is utilization of the hard disk in data reading or writing; or the delay-related indicator value is a read or write speed of the hard disk in data reading or writing.

**12.** The apparatus according to any one of claims 9 to 11, wherein the first threshold is N, the first range is corresponding to N second delays, and N is an integer greater than or equal to 1; and

the sampling unit is further configured to: before calculating the ratio of the first delay to the average delay in a range, calculate the average value of the multiple second delays of the N second delays, to obtain the average delay in a range.

13. The apparatus according to claim 12, wherein the N second delays are sequentially arranged in a sampling order, the multiple second delays are the first M second delays of the N second delays, M is an integer, $N/3 \leq M \leq 2N/3$, and both N/3 and 2N/3 are rounded to integers.

14. The apparatus according to claim 13, wherein M=N/2; and the multiple second delays are the first N/2 second delays of the N second delays, and N/2 is rounded to an integer.

15. The apparatus according to any one of claims 9 to 14, wherein the average value of the multiple second delays that is calculated by the sampling unit is an arithmetic average value of the multiple second delays or a geometric average value of the multiple second delays; and the average value of the multiple first ratios that is calculated by the detection unit is an arithmetic average value of the multiple first ratios or a geometric average value of the multiple first ratios.

16. The apparatus according to any one of claims 9 to 15, wherein the apparatus is applied to a scenario in which there are multiple hard disks, the apparatus performs detection on a first hard disk, and the first hard disk is one of the multiple hard disks; and the detection unit is further configured to: obtain multiple average values that are of first ratios and that are in a one-to-one correspondence with other hard disks of the multiple hard disks except the first hard disk; when an average value of first ratios that is corresponding to each of the multiple hard disks is less than the third threshold, calculate an average value of multiple average values that are of first ratios and that are in a one-to-one correspondence with the multiple hard disks, to obtain a first average value; calculate a ratio of the average value of the first ratios that is corresponding to each of the multiple hard disks, to the first average value, so as to obtain multiple second ratios; and determine that a hard disk corresponding to a second ratio of the multiple second ratios that is greater than or equal to a fourth threshold is a slow disk, wherein a method for obtaining an average value of first ratios that is corresponding to each of the other hard disks is the same as a method for obtaining an average value of first ratios that is corresponding to the first hard disk.

FIG. 1

A detection node periodically performs sampling in a detection period, and the detection node performs S100 to S102 in each sampling period — S10

The detection node obtains a first delay of data reading or writing that is performed on a hard disk in the current sampling period, and a first-delay-related indicator value, where the first-delay-related indicator value is a specific value of a delay-related indicator value, and the delay-related indicator value is a delay-varying value — S100

The detection node determines a first range to which the first-delay-related indicator value belongs, where the first range is one of multiple ranges into which a maximum delay-related indicator value is pre-divided — S101

If the first range is a full range, the detection node calculates a ratio of the first delay to an average delay in a range, to obtain a first ratio — S102

The current detection period does not end

The current detection period ends

Each time after one detection period ends and before a next detection period starts, the detection node performs S110 and S111 — S11

If a quantity of all delay-related indicator values that are obtained in all sampling periods in the current detection period and that fall within all full ranges is greater than or equal to a second threshold, the detection node calculates an average value of multiple first ratios that are calculated in multiple sampling periods, to obtain an average value of first ratios, where the multiple sampling periods are sampling periods in which multiple delay-related indicator values that fall within all the full ranges are obtained — S110

If the average value of the first ratios is greater than or equal to a third threshold, the detection node determines that the hard disk is a slow disk — S111

FIG. 2

A detection node periodically performs sampling in a detection period, and the detection node performs S100 to S102 in each sampling period — S10

↓

The detection node obtains a first delay of data reading or writing that is performed on a hard disk in the current sampling period, and a first-delay-related indicator value, where the first-delay-related indicator value is a specific value of a delay-related indicator value, and the delay-related indicator value is a delay-varying value — S100

↓

The detection node determines a first range to which the first-delay-related indicator value belongs, where the first range is one of multiple ranges into which a maximum delay-related indicator value is pre-divided — S101

↓

The detection node records, after the current sampling is performed, that a quantity of all delay-related indicator values that are obtained in all sampling periods and that fall within the first range is a first number, where each sampling period is corresponding to one delay-related indicator value — S103

↓

The detection node determines whether the first number reaches a first threshold — S104

If the first number reaches the first threshold, the detection node determines that the first range is a full range — S105

If the first number does not reach the first threshold, the detection node determines that the first range is not a full range, and proceeds to a next sampling period for sampling — S106

If the first range is a full range, the detection node calculates a ratio of the first delay to an average delay in a range, to obtain a first ratio — S102

The current detection period ends ↓

Each time after one detection period ends and before a next detection period starts, the detection node performs S110 and S111 — S11

↓

If a quantity of all delay-related indicator values that are obtained in all sampling periods in the current detection period and that fall within all full ranges is greater than or equal to a second threshold, the detection node calculates an average value of multiple first ratios that are calculated in multiple sampling periods, to obtain an average value of first ratios, where the multiple sampling periods are sampling periods in which multiple delay-related indicator values that fall within all the full ranges are obtained — S110

↓

If the average value of the first ratios is greater than or equal to a third threshold, the detection node determines that the hard disk is a slow disk — S111

The current detection period does not end

The current detection period does not end

FIG. 3

A detection node periodically performs sampling in a detection period, and the detection node performs S100 to S102 in each sampling period ⟶ S10

The detection node obtains a first delay of data reading or writing that is performed on a hard disk in the current sampling period, and a first-delay-related indicator value, where the first-delay-related indicator value is a specific value of a delay-related indicator value, and the delay-related indicator value is a delay-varying value ⟶ S100

The detection node determines a first range to which the first-delay-related indicator value belongs, where the first range is one of multiple ranges into which a maximum delay-related indicator value is pre-divided ⟶ S101

If the first range is a full range, the detection node calculates an average value of multiple second delays of N second delays, to obtain an average delay in a range ⟶ S107

The detection node calculates a ratio of the first delay to the average delay in a range, to obtain a first ratio ⟶ S102a

The current detection period ends

Each time after one detection period ends and before a next detection period starts, the detection node performs S110 and S111 ⟶ S11

If a quantity of all delay-related indicator values that are obtained in all sampling periods in the current detection period and that fall within all full ranges is greater than or equal to a second threshold, the detection node calculates an average value of multiple first ratios that are calculated in multiple sampling periods, to obtain an average value of first ratios, where the multiple sampling periods are sampling periods in which multiple delay-related indicator values that fall within all the full ranges are obtained ⟶ S110

If the average value of the first ratios is greater than or equal to a third threshold, the detection node determines that the hard disk is a slow disk ⟶ S111

The current detection period does not end

FIG. 4

A detection node obtains an average value of first ratios that is corresponding to a first hard disk ⟩ S201

The detection node obtains multiple average values that are of first ratios and that are in a one-to-one correspondence with other hard disks of multiple hard disks except the first hard disk ⟩ S202

The detection node calculates an average value of multiple average values that are of first ratios and that are in a one-to-one correspondence with the multiple hard disks, to obtain a first average value ⟩ S203

The detection node calculates a ratio of an average value of first ratios that is corresponding to each of the multiple hard disks, to the first average value, so as to obtain multiple second ratios ⟩ S204

The detection node determines that a hard disk corresponding to a second ratio of the multiple second ratios that is greater than or equal to a fourth threshold is a slow disk ⟩ S205

FIG. 5

Slow-disk detection apparatus

Sampling unit 10

Detection unit 11

FIG. 6

Slow-disk detection apparatus

21

Memory

Software
program

23

20

Processor

22

Communications
interface

FIG. 7

# INTERNATIONAL SEARCH REPORT

| | International application No. |
|---|---|
| | PCT/CN2016/091605 |

## A. CLASSIFICATION OF SUBJECT MATTER

G06F 11/16 (2006.01) i, G06F 3/06 (2006.01) i,

According to International Patent Classification (IPC) or to both national classification and IPC

## B. FIELDS SEARCHED

Minimum documentation searched (classification system followed by classification symbols)

G06F; G11C

Documentation searched other than minimum documentation to the extent that such documents are included in the fields searched

Electronic data base consulted during the international search (name of data base and, where practicable, search terms used)

DATABASE: CNABS, CNTXT, CNKI, DWPI, hard disk, detect+, slow disk, delay+, time interval, I/O, period, index, interval, section, full+, average, rate, ratio, sampl+, threshold, speed, order+

## C. DOCUMENTS CONSIDERED TO BE RELEVANT

| Category* | Citation of document, with indication, where appropriate, of the relevant passages | Relevant to claim No. |
|---|---|---|
| A | CN 103810062 A (HUAWEI TECHNOLOGIES CO., LTD.) 21 May 2014 (21.05.2014) the whole document | 1-16 |
| A | CN 103488544 A (HUAWEI TECHNOLOGIES CO., LTD.) 01 January 2014 (01.01.2014) the whole document | 1-16 |
| A | CN 103019623 A (HUAWEI TECHNOLOGIES CO., LTD.) 03 April 2013 (03.04.2013) the whole document | 1-16 |
| A | WO 2005017735 A1 (FUJITSU LTD.) 24 February 2005 (24.02.2005) the whole document | 1-16 |
| A | CN 103744613 A (RAMAXEL SCI & TECHNOLOGY SHENZHEN CO., LTD.) 23 April 2014 (23.04.2014) the whole document | 1-16 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 October 2016 | 31 October 2016 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHAO, Xiaoning Telephone No. (86-10) 62412071 |

Form PCT/ISA/210 (second sheet) (July 2009)

**INTERNATIONAL SEARCH REPORT**
Information on patent family members

| | | International application No. |
|---|---|---|
| | | PCT/CN2016/091605 |

| Patent Documents referred in the Report | Publication Date | Patent Family | Publication Date |
|---|---|---|---|
| CN 103810062 A | 21 May 2014 | CN 103810062 B | 30 December 2015 |
| CN 103488544 A | 01 January 2014 | CN 103488544 B | 17 August 2016 |
| CN 103019623 A | 03 April 2013 | CN 103019623 B | 20 January 2016 |
| WO 2005017735 A1 | 24 February 2005 | US 2006106926 A1 | 18 May 2006 |
| CN 103744613 A | 23 April 2014 | None | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201510466756X